# EUROPEAN PATENT SPECIFICATION

(11) **EP 2 260 393 B1**
(45) Date of publication and mention of the grant of the patent: **20.08.2014**
(21) Application number: 09755507.2
(22) Date of filing: 06.04.2009
(51) Int. Cl.: G06F 13/40

(54) **FAULT-AND VARIATION-TOLERANT ENERGY-AND AREA-EFFICIENT LINKS FOR NETWORK-ON-CHIPS**
FEHLER- UND ABWEICHUNGSTOLERANTE SOWIE ENERGIE- UND BEREICHSEFFIZIENTE LINKS FÜR ON-CHIP-NETZWERKE
LIAISONS ÉCONOMES EN ÉNERGIE ET EN ESPACE TOLÉRANT LES PANNES ET LES VARIATIONS DESTINÉES AUX RÉSEAUX SUR PUCES

(30) Priority: 04.04.2008 US 123020
(43) Date of publication of application: 15.12.2010
(73) Proprietor: Arizona Board Of Regents, A Body Corp. Of The State Of Arizona, Acting For And On Behalf Of The University Of Arizona, Tucson, AZ 85721-0158 (US); Ohio University, Athens, OH 45701 (US)
(72) Inventor: LOURI, Ahmed, Tucson, AZ 85750 (US); ROVEDA, Janet, Meiling Wang, Tucson, AZ 85742 (US); KODI, Avinash, K., Athens, OH 45701 (US); SARATHY, Ashwini, Hillsboro, OR 97124 (US)
(74) Representative: Zwicker, Jörk
(86) International application number: PCT/US2009/039583
(87) International publication number: WO 2009/146145

(56) References cited:
- SRINIVASAN MURALI ET AL: "Comparison of a Timing-Error Tolerant Scheme with a Traditional Re-transmission Mechanism for Networks on Chips" SYSTEM-ON-CHIP, 2006. INTERNATIONAL SYMPOSIUM ON, IEEE, PI, 1 November 2006 (2006-11-01), pages 1-4, XP031053844 ISBN: 978-1-4244-0621-0

## Description

### FIELD OF INVENTION

The present invention relates to the storage and transmission of data in electrical devices. Specifically, the invention relates to methods for storing and transmitting data within Network-on-Chip architectures.

### BACKGROUND

Advancements in complementary metal-oxide semiconductor (CMOS) fabrication and processing technology has allowed for shrinkage of circuit features and enabled the integration of multiple processing cores into System-on-Chip (SoC) platforms. However, feature scaling into the deep sub-micron regime has revealed interconnect design issues such as global wire delays, which do not scale as fast as gate delays, and limit the efficacy of design techniques typically used in traditional single-chip architectures. To address issues with wire delays in SoC architectures, it is possible to adopt one of a group of more flexible, scalable, packet-switched architectures, known as Network-on-Chip (NoC) or On-Chip Network (OCN).

XPO31053844 discoses a NoC having a pipeline of FIFO stages between a sender and a receiver.

### SUMMARY

In a first aspect, the present invention provides methods for correcting transmission errors in an Network-on-Chip architecture comprising: (i) configuring a plurality of three-state repeater stages to store data in response to receiving a control signal, (ii) detecting an error in one of the plurality of three-state repeater stages, and (iii) in response to detecting an error in a repeater stage correcting the error. In example implementation of the methods of the first aspect, correcting the error may comprises: (i) gating clock edge for one clock cycle, (ii) re-computing the result at each repeater stage, and (iii) replacing any errors with correct values.

Example implementations of the methods of the first aspect may further comprise responding to detecting an error in a repeater stage by (i) shifting the clock phase by 180 degrees; and (ii) overwriting a signal with an error with a correct signal. In other example implementations of the methods of the first aspect, detecting an error in one of the plurality of three state repeater stages may comprise comparing an output generated by a first three-state repeater to an output generated a second three-state repeater. In such example implementations, the output generated by a second three-state repeater may be generated by a shadow-repeater.

In other example implementations of methods of the first aspect, correcting an error may comprise selecting an output generated by a shadow-repeater and presenting the output of the shadow repeater at an output of the three-state repeater stage. The methods of the first aspect may further comprise transmitting a signal indicating the presence of an error from the three-state repeater stage.

In a second aspect, the invention provides methods for handling transmission errors in a Network-on-Chip architecture comprising: (i) transmitting a bit of data to a first three-state repeater, (ii) transmitting the bit of data to a second three-state repeater, (iii) detecting a difference between an output of the first three-state repeater and an output of the second three-state repeater, and (iv) selecting the output of the second three-state repeater for transmission. The methods of the second aspect may further comprise waiting during a delay period between transmitting the bit of data to the first three-state repeater and transmitting the bit of data to the second three-state repeater.

In example implementations of the methods of the second aspect, detecting a difference between an output of the first three-state repeater and an output of the second three-state repeater may comprise applying the outputs of the repeaters to input connections on a comparator. In such example implementations, the methods may further comprise transmitting an output of the comparator to a control block.

In additional example implementations of the methods of the second aspect, selecting the output of the second three-state repeater for transmission may comprise applying the output of the first three-state repeater to a first input connection of a multiplexer, applying the output of the second three-state repeater to a second input connection of the multiplexer, and applying an output of the comparator to a third input connection of the multiplexer. In such example implementations, the methods may further comprise configuring the multiplexer to select the output of the second three-state repeater in response to detecting an output of the comparator indicating the presence of an error.

In other example implementations of the methods of the second aspect, the methods may further comprise receiving at the first three-state repeater and at the second three-state repeater a control signal transmitted by a control block. In such example implementations, the control signal transmitted by the control block may indicate a congestion status of a router within a Network-on-Chip architecture. In other example implementations, in response to receiving a control signal indicating a congestion status of a router, the first three-state repeater and the second three-state repeater may store the bit of data.

In a third aspect, the invention provides methods for controlling a three-state repeater stage in a Network-on-Chip architecture comprising: (i) receiving at a control block a signal indicating the presence of an error within a three-state repeater stage, and (ii) in response to receiving the signal indicating the presence of an error within a three-state repeater stage, transmitting a signal to a three-state repeater stage instructing the three-state repeater stage to hold the data at the three-state repeater stage in place.

In example implementations of the methods of the third aspect, the methods may further comprise, in response to receiving the signal indicating the presence of an error within a three-state repeater stage, shifting a clock phase by 180 degrees. In such example implementations, the methods may further comprise correcting the error within a three state repeater stage. In additional example implementations of the methods of the third aspect, correcting the error within a three-state repeater stage may comprise: (i) selecting an output of a shadow-repeater in the three-state repeater stage, and (ii) overwriting the error within the three-state repeater stage with the output of the shadow-repeater in the three-state repeater stage.

### BRIEF DESCRIPTION OF FIGURES

Figure 1 depicts a schematic diagram of a fault-tolerant repeater that may be used in accordance with an aspect of the invention.
Figure 2 depicts a schematic diagram of an inter-router link that may be used in accordance with an aspect of the invention.
Figure 3 depicts a timing diagram depicting a dual-phase design that may be implemented in accordance with an aspect of the invention.

### DETAILED DESCRIPTION OF EXAMPLE EMBODIMENTS

With technology scaling, the increased wire delays in current multi-core architectures have led to the modular and scalable packet-switched Network-on-Chip (NoC) paradigm. One of the challenges currently faced by NoC designers is that of power dissipation. Within an NoC architecture, a substantial amount of the NoC router power is consumed by the input buffers of the routers.

Current high-speed very-large-scale-integration (VLSI) designs often require the insertion of repeaters along the wires connecting routers in order to meet timing requirements and overcome the quadratic increase in delay that accompanies an increase in wire length. With rapidly diminishing feature size, inter-router links within an NoC architecture may become more susceptible to transient failures caused by coupling noise, process variations, and other sources. In the methods described herein, robust repeater designs are implemented as part of a plurality of methods for establishing fault-tolerant links capable of dynamic error correction. In addition to detecting a fault, the methods provide for sending the correct data to the next repeater stage while avoiding stalls in data flow.

### Channel Buffer Implementation

In known designs, conventional repeaters are inserted along a link between routers, and are sized and spaced according to a first-order resistor-capacitor (RC) wire delay model. In accordance with one aspect of the invention, the conventional repeaters are replaced with three-state repeaters. A single stage of the three-state repeaters comprises a three-state repeater inserted at along all of the wires within a particular link. Each such repeater stage may receive a control input for the corresponding control block. When the control input to a repeater stage is high, the repeaters in that stage function as channel buffers. When the control input to the repeater stage is low, the three-state repeaters function as conventional repeaters. Each stage can be controlled such that in the absence of congestion, the three-state repeater operates similarly to a conventional repeater - data moves through the link without being held in place by the three-state repeater. When the control block is activated in the presence of congestion, the control block can activate or tri-state the three-state repeaters.

Once activated, the three-state repeaters function as channel buffers and the data bits are held in position. Once congestion is alleviated, the control logic can be adjusted, and the three-state repeaters can function as conventional repeaters. Since the three-state repeaters can adaptively function as channel buffers, a given level of network performance can be achieved using routers with a reduced number of input buffers, effectively reducing the size and power consumption of a router.

### Link Implementation

In example implementations, conventional repeaters along a link are replaced by fault-tolerant three-state repeaters. As used herein, a single "stage" of three-state repeaters comprises a three-state repeater inserted along all the wires in a given link. A stage of three-state repeaters may be controlled with signal sent from a control block. In an example implantation of a stage of three-state repeaters, the three-state repeaters function as conventional repeaters in response to receiving a low signal from a control block. In response to receiving a high signal from a control block, the three-state repeaters are tri-stated and hold the data in position at the stage of three-state repeaters.

Each three-state repeater may be protected by a shadow-repeater that captures signals with transient errors. As used herein, a shadow-repeater has the same design as the main repeater it is protecting, but receives a delayed control signal compared to the main repeater. The shadow-repeater and the main repeater have the same design in order to avoid timing difference at the output.

In example implementations involving a shadow-repeater, an output of the main repeater and an output of the shadow-repeater are comparing using a comparator or an XOR gate. If a difference between the compared repeater outputs is detected, an error is present. In response to detecting an error, a multiplexer may be used to select the output from the shadow-repeater. Since the shadow-repeater receives a delayed control signal, it is likely to be free from transient errors. After the multiplexer selects the shadow-repeater output, the corrected data can be either transmitted or held, depending on the state of the control signal.

In some example implementations of links, latches and/or clock signals are not needed as control signals for either the shadow repeater or the main repeater. In such configurations, errors in data along a link can be corrected without stalling the data or waiting for a clock signal. In other example implementations, latches or clock signals may be used as a control signal for a shadow repeater or a main repeater.

### Control Block Implementation

Control blocks may be used to control both the main three-state repeater and the shadow-repeater inserted along a link between two routers. In example implementations, a single control block may be used to control the functionality of all the repeaters within a single stage of repeaters. In one example implementation of control blocks, an incoming congestion signal is delayed by one clock cycle at each control block. In the next clock cycle, the repeaters in that stage may be tri-stated, and the congestion signal may be passed to the next control block. This allows for each repeater stage to be successively tri-stated to hold the data in position until a congestion-release signal arrives. In example implementations of a control block, the control block may be configured to operate accurately at variable clock speeds. For example, a shadow flip-flop may be used to sample the congestion signal at a delayed clock, and thus catch timing errors. A control block may also be configured to use a dual-phase design, where in the presence of an error, the clock switches to the opposite phase. By switching to the opposite phase, the timing slack may be extended, to allow additional time to overwrite an erroneous signal within a repeater stage. In addition, a control block may be configured to be disabled when there is no congestion, thus reducing the power consumption of the control block.

### Additional Aspects

In a first aspect, the present invention provides methods for correcting transmission errors in an Network-on-Chip architecture comprising: (i) configuring a plurality of three-state repeater stages to store data in response to receiving a control signal, (ii) detecting an error in one of the plurality of three-state repeater stages, and (iii) in response to detecting an error in a repeater stage correcting the error. Any of the three-state repeaters described herein may be used as part of a three-state repeater stage. For example, a stage may comprise a main three-state repeater and a shadow-repeater that are both electrically connected to a comparator configured to examine the outputs of the repeaters. In example implementation of the methods of the first aspect, correcting the error may comprises: (i) gating clock edge for one clock cycle, (ii) re-computing the result at each repeater stage, and (iii) replacing any errors with correct values. When the clock edge is gated, the entire link is stalled for just one clock cycle, which allows for each three-state repeater stage to detect and correct errors data during transmission, without requiring a second clock cycle to correct the errors. This stalled period also allows for each stage to recalculate its own result, thus allowing for errors that were previously forwarded to subsequent stages to be caught and corrected.

Example implementations of the methods of the first aspect may further comprise responding to detecting an error in a repeater stage by (i) shifting the clock phase by 180 degrees; and (ii) overwriting a signal with an error with a correct signal. Such implementations can be considered dual-phase implementations, and may allow for a corrected signal that arrives after an erroneous signal to have sufficient time to overwrite the erroneous signal, without requiring an additional clock cycle or further stalls in the transmission. In other example implementations of the methods of the first aspect, detecting an error in one of the plurality of three state repeater stages may comprise comparing an output generated by a first three-state repeater to an output generated a second three-state repeater. In such example implementations, the output generated by a second three-state repeater may be generated by a shadow-repeater. These outputs may be used to detect an error: For example, the outputs of both the main repeater and the shadow-repeater may be electrically coupled to inputs of a comparator and to inputs of a multiplexer. The output of the comparator may also be electrically coupled to an input of the multiplexer, allowing for the selection of the shadow-repeater output when an error is detected.

In other example implementations of methods of the first aspect, correcting an error may comprise selecting an output generated by a shadow-repeater and presenting the output of the shadow repeater at an output of the three-state repeater stage. The methods of the first aspect may further comprise transmitting a signal indicating the presence of an error from the three-state repeater stage. For example, a signal indicating the presence of an error may be used to control other aspects of the NoC architecture.

In a second aspect, the invention provides methods for handling transmission errors in a Network-on-Chip architecture comprising: (i) transmitting a bit of data to a first three-state repeater, (ii) transmitting the bit of data to a second three-state repeater, (iii) detecting a difference between an output of the first three-state repeater and an output of the second three-state repeater, and (iv) selecting the output of the second three-state repeater for transmission. The methods of the second aspect may further comprise waiting during a delay period between transmitting the bit of data to the first three-state repeater and transmitting the bit of data to the second three-state repeater. Any of the repeater stage architectures described herein may be used with methods of the second aspect.

In example implementations of the methods of the second aspect, detecting a difference between an output of the first three-state repeater and an output of the second three-state repeater may comprise applying the outputs of the repeaters to input connections on a comparator. In such example implementations, the methods may further comprise transmitting an output of the comparator to a control block. In implementations where the output of the comparator is transmitted to a control block, the transmitted output may be used to trigger an action in the control block, such as the transmission of a signal instructing one or more repeater stages to cease transmitting and to hold data in place.

In additional example implementations of the methods of the second aspect, selecting the output of the second three-state repeater for transmission may comprise applying the output of the first three-state repeater to a first input connection of a multiplexer, applying the output of the second three-state repeater to a second input connection of the multiplexer, and applying an output of the comparator to a third input connection of the multiplexer. In such example implementations, the methods may further comprise configuring the multiplexer to select the output of the second three-state repeater in response to detecting an output of the comparator indicating the presence of an error. Since the transmission of data to the shadow-repeater may be slightly delayed with respect to transmission to the main repeater, the output of the shadow-repeater is less susceptible to transient errors, and thus, if there is a difference between the output of the main repeater and the shadow-repeater, it is likely that the main repeater output represents an error.

In other example implementations of the methods of the second aspect, the methods may further comprise receiving at the first three-state repeater and at the second three-state repeater a control signal transmitted by a control block. In such example implementations, the control signal transmitted by the control block may indicate a congestion status of a router within a Network-on-Chip architecture. In other example implementations, in response to receiving a control signal indicating a congestion status of a router, the first three-state repeater and the second three-state repeater may store the bit of data.

In a third aspect, the invention provides methods for controlling a three-state repeater stage in a Network-on-Chip architecture comprising: (i) receiving at a control block a signal indicating the presence of an error within a three-state repeater stage, and (ii) in response to receiving the signal indicating the presence of an error within a three-state repeater stage, transmitting a signal to a three-state repeater stage instructing the three-state repeater stage to hold the data at the three-state repeater stage in place. As described herein, the three-state repeaters may be configured such that when a high control signal is received from a control block, the repeaters are tri-stated and hold the data in place. When the three-state repeaters receive a low control signal from the control block, they may behave as conventional repeaters, and retransmit the data presented at their inputs.

In example implementations of the methods of the third aspect, the methods may further comprise, in response to receiving the signal indicating the presence of an error within a three-state repeater stage, shifting a clock phase by 180 degrees. In such example implementations, the methods may further comprise correcting the error within a three state repeater stage. In additional example implementations of the methods of the third aspect, correcting the error within a three-state repeater stage may comprise: (i) selecting an output of a shadow-repeater in the three-state repeater stage, and (ii) overwriting the error within the three-state repeater stage with the output of the shadow-repeater in the three-state repeater stage.

### Examples

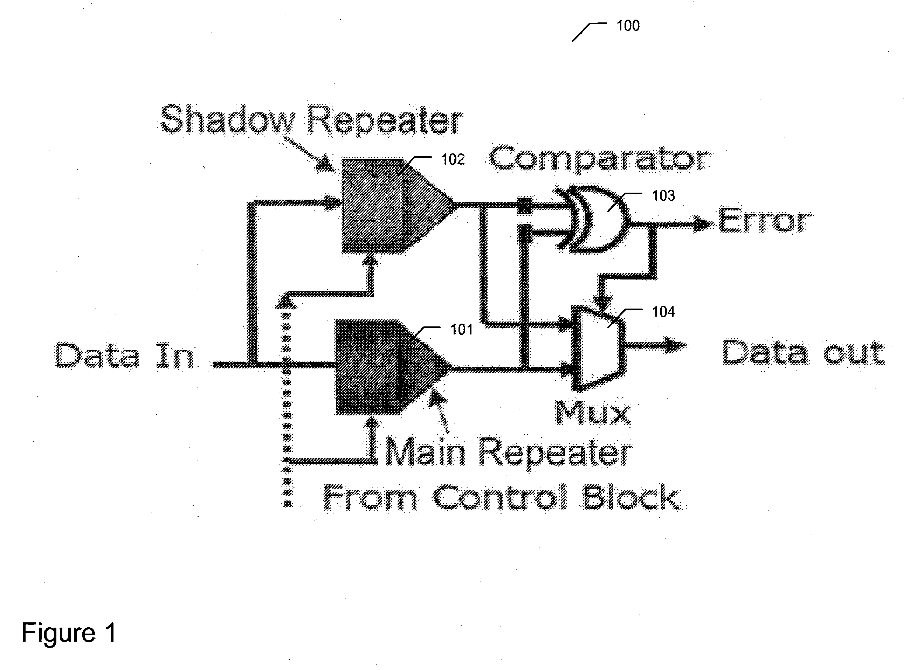

Turning now to the figures, figure 1 depicts a schematic diagram of a fault-tolerant repeater 100 that may be used in accordance with an aspect of the invention. As shown in figure 1, the line marked "Data in" is electrically coupled to the inputs of the main three-state repeater 101 and the shadow-repeater 102. Both the main repeater 101 and the shadow-repeater 102 are configured to receive a signal from a control block, which can be used to instruct the repeaters to either hold or transmit the data presented at their respective inputs. The output of the main repeater 101 is electrically coupled to an input of comparator 103 and an input of multiplexer 104. Similarly, the output of shadow-repeater 102 is electrically coupled to an input of comparator 103 and multiplexer 104. Further, as shown in figure 1, the output of comparator 103 is electrically coupled to an input, such as a control input of multiplexer 104. The output of comparator 103 is also marked as "error," indicating that the output can be used to signal the presence of a discrepancy between the outputs of repeaters 101 and 102, indicating the existence of an error. If an error is detected by comparator 103, it signals multiplexer 104 to output the signal received from the shadow-repeater 102, which can serve to correct the error, and prevent the propagation of the error to subsequent stages.

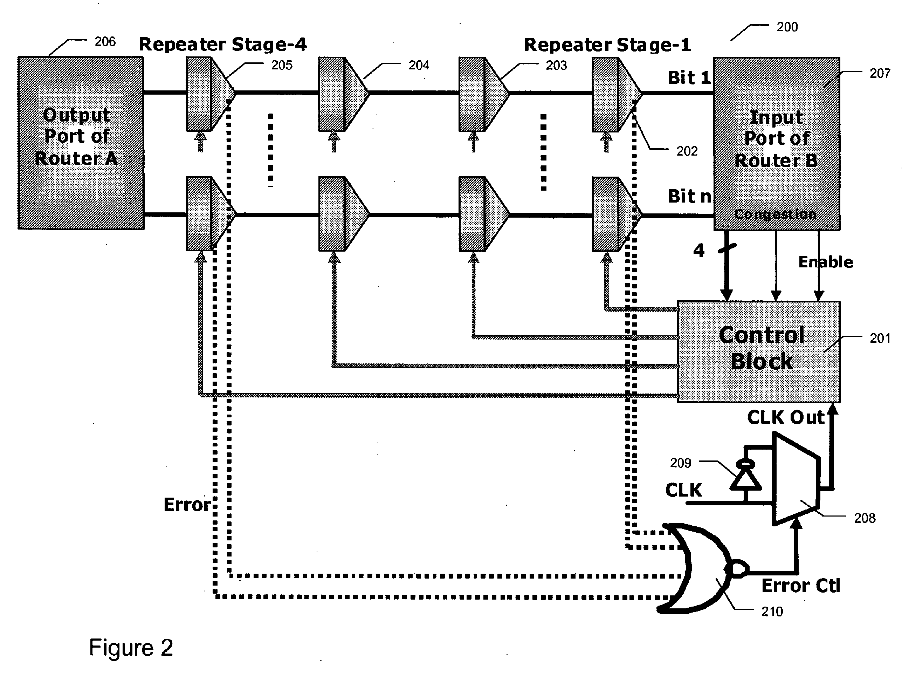

Figure 2 depicts a schematic diagram of an inter-router link 200 that may be used in accordance with an aspect of the invention. In inter-router link 200 a control block 201 is used to control all of the stages of three-state repeaters 202-205 in a link between routers 206 and 207. As shown in figure 2, router 207 is electrically connected to control block 201 and can send several different signals to control block 201. The signal marked "Enable" is an enable signal used to turn the control block 201 on and off. For example, when there is no congestion in the router 207, the control block 201 may be turned off to draw less power. The signal marked "Congestion" is a congestion signal, used to notify the control block 201 of a congestion status of the router 207. The signals marked with the numeral "4" comprise a plurality of signals sent from the router 207 to the control block 201 to instruct the control block to allow a particular stage to transmit data.

As shown in figure 2, control block 201 is also electrically coupled to each of the three-state repeater stages 202-205, and can be used to control whether the three-state repeaters in any stage store or transmit the data present at that stage. For example, the control block 201 can be used to selectively hold data in place along a link between routers 206 and 207 to allow for error correction in accordance with any of the methods described herein.

Control block 201 is also configured to receive a clock signal, marked "CLK out" from a multiplexer 208. Multiplexer 208 is configured to selectively output one of two phases of a clock signal, generated by the line marked "CLK" and inverter 209. Multiplexer 208 is also configured to accept a control signal, marked "Error Ctl" from NOR gate 210. NOR gate 210 receives at its inputs signals from each of the repeater stages 202-205, and if an signal indicating that an error is present in any of the repeater stages 202-205 is detected, NOR gate 210 is configured to cause the multiplexer 208 to switch clock phases, introducing a 180 degree shift, as described herein.

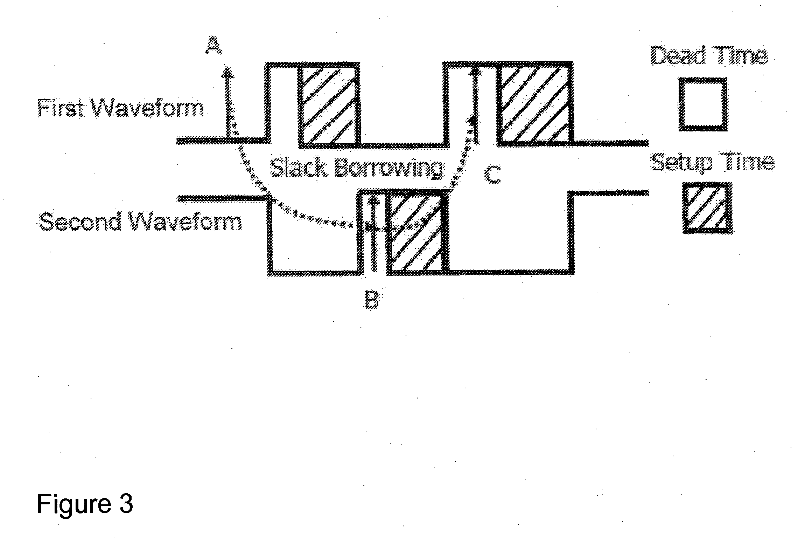

Figure 3 depicts a timing diagram depicting a dual-phase design. In figure 3, the waveforms marked "first waveform" and "second waveform" are clock signals, and are offset by 180 degrees with respect to each other. During initial operation of an inter-router link, the first waveform is used as the clock. At point A, a repeater stage has detected an error, and triggered a switch to the second waveform, thus introducing a 180 degree phase shift in the clock. This extends the timing slack to allow the corrected signal to be captured, as shown at point B in figure 3. At point C, a successive timing error is detected, which can in turn trigger a 180 degree phase shift in the clock.

## Claims

1. A method for correcting transmission errors in a Network-on-Chip architecture comprising:
configuring a plurality of three-state repeater stages (202, 203, 204, 205) to store data in response to receiving a control signal;
detecting an error in one of the plurality of three-state repeater stages (202, 203, 204, 205); and
in response to detecting an error in a repeater stage (202, 203, 204, 205) correcting the error,
wherein each of the plurality of three-state repeater stages is coupled to a control block (201), and wherein the control block controls each of the plurality of three-state repeater stages to store and transmit data present at each respective stage.

2. The method of claim 1 wherein correcting the error comprises:
(i) re-computing the result at each repeater stage (202, 203, 204, 205); and
(ii) replacing any errors with correct values
or
(i) selecting an output generated by a shadow-repeater; and
(ii) presenting the output of the shadow repeater at an output of the three-state repeater stage (202, 203, 204, 205).

3. The method of claim 1 further comprising:
in response to detecting an error in a repeater stage (202, 203, 204, 205):
(i) shifting the clock phase by 180 degrees; and
(ii) overwriting a signal with an error with a correct signal
or
transmitting a signal indicating the presence of an error from the three-state repeater stage (202, 203, 204, 205).

4. The method of claim 1 wherein detecting an error in one of the plurality of three state repeater stages (202, 203, 204, 205) comprises comparing an output generated by a first three-state repeater to an output generated a second three-state repeater.

5. The method of claim 4 wherein the output generated by a second three-state repeater is generated by a shadow-repeater.

6. A method for handling transmission errors in a Network-on-Chip architecture comprising:
transmitting a bit of data to a first three-state repeater (101);
transmitting the bit of data to a second three-state repeater (102);
detecting a difference between an output of the first three-state repeater (101) and an output of the second three-state repeater (102),
wherein the first three-state repeater [101] and the second three-state repeater [102] are coupled to a control block, and wherein the control block controls the first three-state repeater [101] and the second three-state repeater [102] to store and transmit data present at each respective repeater; and
selecting the output of the second three-state repeater (102) for transmission.

7. The method of claim 6 further comprising waiting during a delay period between transmitting the bit of data to the first three-state repeater (101) and transmitting the bit of data to the second three-state repeater (102) or receiving at the first three-state repeater (101) and at the second three-state repeater (102) a control signal transmitted by the control block.

8. The method of claim 6 wherein detecting a difference between an output of the first three-state repeater (101) and an output of the second three-state repeater (102) comprises applying the outputs of the repeaters to input connections on a comparator (103).

9. The method of claim 8 further comprising transmitting an output of the comparator (103) to the control block.

10. The method of claim 6 wherein selecting the output of the second three-state repeater (102) for transmission comprises applying the output of the first three-state repeater (101) to a first input connection of a multiplexer (104), applying the output of the second three-state repeater (102) to a second input connection of the multiplexer (104), and applying an output of the comparator (103) to a third input connection of the multiplexer (104).

11. The method of claim 10 further comprising configuring the multiplexer (104) to select the output of the second three-state repeater (102) in response to detecting an output of the comparator (103) indicating the presence of an error.

12. The method of claim 7 wherein the control signal transmitted by the control block indicates a congestion status of a router within a Network-on-Chip architecture and wherein optionally in response to receiving the control signal indicating a congestion status of a router, the first three-state repeater (101) and the second three-state repeater (102) store the bit of data.

13. A method for controlling a three-state repeater stage (202, 203, 204, 205) in a Network-on-Chip architecture comprising:
receiving at a control block (201) a signal indicating the presence of an error within a three-state repeater stage (202, 203, 204, 205);
in response to receiving the signal indicating the presence of an error within a three-state repeater stage (202, 203, 204, 205), transmitting a signal to a three-state repeater stage (202, 203, 204, 205) instructing the three-state repeater stage (202, 203, 204, 205) to hold the data at the three-state repeater stage (202, 203, 204, 205) in place,
wherein each of the plurality of three-state repeater stages is coupled to the control block (201), and wherein the control block controls each of the plurality of three-state repeater stages to store and transmit data present at each respective stage.

14. The method of claim 13 further comprising:
in response to receiving the signal indicating the presence of an error within a three-state repeater stage (202, 203, 204, 205), shifting a clock phase by 180 degrees optionally comprising correcting the error within a three state repeater stage (202, 203, 204, 205).

15. The method of claim 14 wherein correcting the error within a three-state repeater stage (202, 203, 204, 205) comprises:
(i) selecting an output of a shadow-repeater in the three-state repeater stage (202, 203, 204, 205); and
(ii) overwriting the error within the three-state repeater stage (202, 203, 204, 205) with the output of the shadow-repeater in the three-state repeater stage (202, 203, 204, 205).

## Patentansprüche

1. Verfahren zur Korrektur von Übermittlungsfehlern in einer Netzwerk-auf-Chip Architektur, umfassend:
Konfigurieren einer Vielzahl von tristaten Verstärkerstufen (202, 203, 204, 205), um Daten in Antwort auf das Erhalten eines Steuerungssignals zu speichern;
Detektieren eines Fehlers in einer der Vielzahl von tristaten Verstärkerstufen (202, 203, 204, 205); und
in Antwort auf das Detektieren eines Fehlers in einer Verstärkerstufe (202, 203, 204, 205) den Fehler korrigieren,
wobei jede der Vielzahl von tristaten Verstärkerstufen mit einem Steuerungsblock gekoppelt ist, und wobei der Steuerungsblock jede der Vielzahl der tristaten Verstärker steuert, um die Daten, die in jeder jeweiligen Stufe vorhanden sind, zu speichern und zu übertragen.

2. Verfahren gemäß Anspruch 1, wobei die Korrektur des Fehlers umfasst:
(i) Neuberechnen des Ergebnisses bei jeder Verstärkerstufe (202, 203, 204, 205); und
(ii) Ersetzen jeglicher Fehler durch korrekte Werte
oder
(i) Auswählen eines durch einen Schattenverstärker generierten Outputs, und
(ii) Präsentieren des Outputs des Schattenverstärkers an einem Output der tristaten Verstärkerstufe.

3. Verfahren gemäß Anspruch 1, weiterhin umfassend:
in Antwort auf Detektieren eines Fehlers in einer Verstärkerstufe (202, 203, 204, 205):
(i) Verschieben der Taktphase um 180°, und
(ii) Überschreibens eines fehlerhaften Signals mit einem korrekten
Signal
oder
Übertragung eines Signals, welches auf das Vorhandensein eines Fehlers von der tristaten Verstärkerstufe hinweist.

4. Verfahren gemäß Anspruch 1, wobei das Detektieren eines Fehlers in einer der Vielzahl von tristaten Verstärkerstufen (202, 203, 204, 205) das Vergleichen eines Outputs, generiert durch einen ersten tristaten Verstärker, mit einem Output, generiert durch einen zweiten tristaten Verstärker, umfasst.

5. Verfahren gemäß Anspruch 4, wobei der Output, der durch einen zweiten tristaten Verstärker generiert wird, durch einen Schattenverstärker generiert wird.

6. Verfahren, um Übertragungsfehler in einer Netzwerk-auf-Chip Architektur zu bewältigen, umfassend,
Übertragen eines Datenbits zu einem ersten tristaten Verstärker (101); Übertragen des Datenbits zu einem zweiten tristaten Verstärker (102); Detektieren einer Differenz zwischen einem Output des ersten tristaten Verstärkers (101) und einem Output des zweiten tristaten Verstärkers (102),
wobei der erste tristate Verstärker (101) und der zweite tristate Verstärker (102) an einen Steuerungsblock gekoppelt sind, und wobei der Steuerungsblock den ersten tristaten Verstärker (101) und den zweiten tristaten Verstärker (102) steuert, um an jedem Verstärker die Daten, die an jedem jeweiligen Verstärker vorhanden sind, zu speichern und zu übertragen; und
Auswählen des Outputs des zweiten tristaten Verstärkers (102) zur Übertragung.

7. Verfahren gemäß Anspruch 6, weiterhin umfassend Warten während einer Verzögerungsperiode zwischen Übertragen des Datenbits zum ersten tristaten Verstärker (101) und Übertragen des Datenbits zum zweiten tristaten Verstärker (102) oder Erhalten eines Steuerungssignals, das durch den Steuerungsblock übertragen wird, am ersten tristaten Verstärker (101) und am zweiten tristaten Verstärker (102).

8. Verfahren gemäß Anspruch 6, wobei Detektieren einer Differenz zwischen einem Output des ersten tristaten Verstärkers (101) und einem Output des zweiten tristaten Verstärkers (102) das Anbringen der Outputs der Verstärker an die Eingangsverbindungen auf einer Vergleichsschaltung (Komparator, 103) umfasst

9. Verfahren gemäß Anspruch 8, weiterhin umfassend Übertragen eines Outputs der Vergleichsschaltung (103) zu dem Steuerungsblock.

10. Verfahren gemäß Anspruch 6, wobei das Auswählen des Outputs des zweiten tristaten Verstärkers (102) zur Übertragung Anbringen des Outputs des ersten tristaten Verstärkers (101) an einer ersten Eingangsverbindung eines Multiplexers (104), Anbringen des Outputs des zweiten tristaten Verstärkers (102) an einer zweiten Eingangsverbindung des Multiplexers (104), und Anbringen eines Outputs der Vergleichsschaltung (103) an einer dritten Eingangsverbindung des Multiplexers (104), umfasst.

11. Verfahren gemäß Anspruch 10, weiterhin umfassend das Konfigurieren des Multiplexers (104), um den Output des zweiten tristaten Verstärkers (102) in Antwort auf Detektion eines Outputs der Vergleichsschaltung (103) auszuwählen, welcher die Anwesenheit eines Fehlers anzeigt.

12. Verfahren gemäß Anspruch 7, wobei das durch den Steuerungsblock übertragene Steuerungssignal einen Überlastungsstatus eines Routers in einer Netzwerk-auf-Chip Architektur anzeigt, und wobei optional in Antwort auf Erhalten des Steuerungssignals, welches einen Überlastungsstatus eines Routers anzeigt, der erste tristate Verstärker (101) und der zweite tristate Verstärker das Datenbit speichern.

13. Verfahren zur Kontrolle einer tristaten Verstärkerstufe (202, 203, 204, 205) in einer Netzwerk-auf-Chip Architektur, umfassend:
Erhalten eines Signals an einem Steuerungsblock (201), welches die Anwesenheit eines Fehlers in einer tristaten Verstärkerstufe (202, 203, 204, 205) anzeigt;
in Antwort auf das Erhalten des Signals, welches die Anwesenheit eines Fehlers in einer tristaten Verstärkerstufe (202, 203, 204, 205) anzeigt, Übertragen eines Signals zu einer tristaten Verstärkerstufe (202, 203, 204, 205), Instruieren der tristaten Verstärkerstufe (202, 203, 204, 205), Daten an der tristaten Verstärkerstufe (202, 204, 204, 205) am Ort zu halten,
wobei jede der Vielzahl der tristaten Verstärkerstufen an den Steuerungsblock (201) gekoppelt ist, und wobei der Steuerungsblock jede der Vielzahl der tristaten Verstärkerstufen steuert, um Daten, die an jeder der jeweiligen Stufen vorliegen, zu speichern und zu übertragen.

14. Verfahren gemäß Anspruch 13, weiterhin umfassend:
in Antwort auf Empfang des Signals, welches die Anwesenheit eines Fehlers in einer tristaten Verstärkerstufe (202, 203, 204, 205) anzeigt, Verschieben einer Taktphase um 180°, optional Korrektur des Fehlers in einer tristaten Verstärkerstufe (202, 203, 204, 205) umfassend.

15. Verfahren gemäß Anspruch 14, wobei die Korrektur des Fehlers in einer tristaten Verstärkerstufe (202, 203, 204, 205) umfasst:
(i) Auswählen eines Outputs von einem Schattenverstärker in der tristaten Verstärkerstufe (202, 203, 204, 205);
(ii) Überschreiben des Fehlers in der tristaten Verstärkerstufe (202, 203, 204, 205) mit dem Output des Schattenverstärkers in der tristaten Verstärkerstufe (202, 203, 204, 205).

## Revendications

1. Procédé pour corriger des erreurs de transmission dans une architecture en réseau sur puce comprenant:
la configuration d'une pluralité d'étages de répéteur à trois états (202, 203, 204, 205) pour stocker des données en réponse à la réception signal de pilotage;
la détection d'une erreur dans l'un de la pluralité des étages de répéteur à trois états (202, 203, 204, 205); et
en réponse à la détection d'une erreur dans un étage de répéteur (202, 203, 204, 205), la correction de l'erreur,
dans lequel chacun de la pluralité des étages de répéteur à trois états est couplé à un bloc de pilotage (201), et dans lequel le bloc de pilotage pilote chacun de la pluralité d'étages de répéteur à trois états pour stocker et transmettre des données présentes à chaque étage respectif.

2. Procédé selon la revendication 1, dans lequel la correction de l'erreur comprend:
(i) le re-calcul du résultat à chaque étage de répéteur (202, 203, 204, 205); et
(ii) le remplacement de toutes les erreurs par des valeurs correctes,
ou
(i) la sélection d'une sortie générée par un répéteur d'ombre, et
(ii) la présentation de la sortie du répéteur d'ombre à une sortie de l'étage de répéteur à trois états (202, 203, 204, 205).

3. Procédé selon la revendication 1, comprenant en outre:
en réponse à la détection d'une erreur dans un étage de répéteur (202, 203, 204, 205);
(i) le décalage de la phase d'horloge de 180 degrés; et
(ii) la réécriture d'un signal portant une erreur par un signal correct
ou
la transmission d'un signal indiquant la présence d'une erreur provenant de l'étage de répéteur à trois états (202, 203, 204, 205).

4. Procédé selon la revendication 1, dans lequel la détection d'une erreur dans l'un de la pluralité des étages de répéteur à trois états (202, 203, 204, 205) comprend la comparaison d'une sortie générée par un premier répéteur à trois états avec une sortie générée par un deuxième répéteur à trois états.

5. Procédé selon la revendication 4, dans lequel la sortie générée par un deuxième répéteur à trois états est générée par un répéteur d'ombre.

6. Procédé pour le traitement d'erreurs de transmission dans une architecture en réseau-sur-puce, comprenant:
la transmission d'un bit de données à un premier répéteur à trois états [101];
la transmission du bit de données à un deuxième répéteur à trois états [102];
la détection d'une différence entre une sortie du premier répéteur à trois états (101) et une sortie du deuxième répéteur à trois états (102),
tandis que le premier répéteur à trois états [101] et le deuxième répéteur à trois états [102] sont couplés à un bloc de pilotage, et tandis que le bloc de pilotage pilote le premier répéteur à trois états [101] et le deuxième répéteur à trois états [102] pour stocker les données présentes dans chaque répéteur respectif; et
la sélection de la sortie du deuxième répéteur à trois états (102) pour la transmission.

7. Procédé selon la revendication 6, comprenant en outre l'attente pendant une période de délai entre la transmission du bit de données au premier répéteur à trois états (101) et la transmission du bit de données au deuxième répéteur à trois états ou la réception, au niveau du premier répéteur à trois états (101) et au niveau du deuxième répéteur à trois états (102), d'un signal de pilotage transmis par le bloc de pilotage.

8. Procédé selon la revendication 6, dans lequel la détection de la différence entre une sortie du premier répéteur à trois états (101) et une sortie du deuxième répéteur à trois états (102) comprend l'application des sorties des répéteurs à des connexions d'entrée sur un comparateur (103).

9. Procédé selon la revendication 8, comprenant en outre la transmission d'une sortie du comparateur (103) au bloc de pilotage.

10. Procédé selon la revendication 6, dans lequel la sélection de la sortie du deuxième répéteur à trois états (102) pour transmission comprend l'application de la sortie du premier répéteur à trois états (101) à une première connexion d'entrée d'un multiplexeur (104), l'application de la sortie du deuxième répéteur à trois états (102) à une deuxième connexion d'entrée du multiplexeur (104), et l'application d'une sortie du comparateur (103) à une troisième connexion du multiplexeur (104).

11. Procédé selon la revendication 10, comprenant en outre la configuration du multiplexeur (104) pour la sélection de la sortie du deuxième répéteur à trois états (102) en réponse à la détection d'une sortie du comparateur (103) indiquant la présence d'une erreur.

12. Procédé selon la revendication 7, dans lequel le signal de pilotage transmis par le bloc de pilotage indique un état de congestion d'un routeur dans une architecture en réseau-sur-puce et dans lequel, en option, en réponse à la réception du signal de pilotage indiquant un état de congestion d'un routeur, le premier répéteur à trois états (101) et le deuxième répéteur à trois états (102) stockent le bit de données.

13. Procédé pour le pilotage d'un étage de répéteur à trois états (202, 203, 204, 205) dans une architecture en réseau-sur-puce, comprenant:
la réception sur un bloc de pilotage (201) d'un signal indiquant la présence d'une erreur dans un étage de répéteur à trois états (202, 203, 204, 205);
en réponse à la réception d'un signal indiquant la présence d'une erreur dans un étage de répéteur à trois états (202, 203, 204, 205), la transmission d'un signal à un étage de répéteur à trois états (202, 203, 204, 205) donnant instruction à l'étage du répéteur à trois états (202, 203, 204, 205) de conserver les données dans l'étage du répéteur à trois états (202, 203, 204, 205) en place,
tandis que chacun de la pluralité d'étages du récepteur à trois états est couplé au bloc de pilotage (201), et tandis que le bloc de pilotage pilote chacun de la pluralité d'étages du récepteur à trois états pour stocker et transmettre les données présentes sur chaque étage respectif.

14. Procédé selon la revendication 13, comprenant en outre:
en réponse à la réception du signal indiquant la présence d'une erreur dans un étage de récepteur à trois états (202, 203, 204, 205), le décalage d'une phase d'horloge de 180 degrés, comprenant en option la correction de l'erreur dans un étage de répéteur à trois états (202, 203, 204, 205).

15. Procédé selon la revendication 14, dans lequel la correction de l'erreur dans un étage de répéteur à trois états (202, 203, 204, 205) comprend:
(i) la sélection de la sortie d'un répéteur d'ombre dans l'étage de répéteur à trois états (202, 203, 204, 205); et
(ii) le remplacement de l'erreur dans l'étage du répéteur à trois états (202, 203, 204, 205) par la sortie du répéteur d'ombre dans l'étage de répéteur à trois états (202, 203, 204, 205).
